# EUROPEAN PATENT APPLICATION

(11) **EP 4 763 596 A1**
(43) Date of publication of application: **24.06.2026**
(21) Application number: 24855222.6
(22) Date of filing: 22.02.2024
(51) Int. Cl.: B60L 53/80, B60S 5/06, B60L 53/36, B60L 53/35

(54) **VEHICLE POSITIONING METHOD AND DEVICE FOR BATTERY SWAPPING STATION, STORAGE MEDIUM AND BATTERY SWAPPING STATION**

(30) Priority: 18.08.2023 CN 202311048142
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN)
(74) Representative: Kraus & Lederer PartGmbB
(86) International application number: PCT/CN2024/078071
(87) International publication number: WO 2025/039488

(57) **Abstract**

A vehicle positioning method for a battery swapping station. The method comprises: acquiring a first distance (L1) between a battery (100) of an inbound vehicle (1) itself and a front axle (400) in a first direction (X), a second distance (L2) between the center of a front wheel and the center of a positioning rod (21) in the first direction when the positioning rod (21) is in contact with the front wheel (500) of the vehicle, a third distance (L3) between the center of the current position of the positioning rod and a recess wall (11) of a battery swapping recess (10) in the first direction, and a safety distance (Q) between the battery and the recess wall of the battery swapping recess; on the basis of the first distance, the second distance, the third distance and the safety distance, determining a distance value (W) to be moved by the positioning rod; controlling the positioning rod to move by said distance value in the first direction; and controlling the vehicle to move in the first direction and to make contact with the positioning rod. Also provided are a vehicle positioning device for a battery swapping station, a computer-readable storage medium, and a battery swapping station. The vehicle positioning method for a battery swapping station can satisfy parking position control of vehicles of different models, thus facilitating battery swapping.

## Description

### CROSS-REFERENCE TO RELATED APPLICATIONS

The present application claims priority to Chinese Patent Application No. 202311048142.0, filed on August 18, 2023 and entitled "Vehicle Positioning Method and Device for Battery Swapping Station, Storage Medium, and Battery Swapping Station", which is incorporated herein by reference in its entirety.

### TECHNICAL FIELD

The present application relates to the field of batteries, and in particular, to a vehicle positioning method and device for a battery swapping station, a storage medium, and a battery swapping station.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

In the related art, due to the insufficient positioning method for the battery swapping station, the stopping positions of vehicles of different models after entering the battery swapping station are not well controlled, which is not conducive to battery swapping.

### SUMMARY

In view of the above problems, the present application provides a vehicle positioning method and device for a battery swapping station, a storage medium, and a battery swapping station, and the vehicle positioning method for a battery swapping station can satisfy parking position control of vehicles of different models, thus facilitating battery swapping.

In a first aspect, the present application provides a vehicle positioning method for a battery swapping station, the battery swapping station including a battery swapping recess and a positioning device, the positioning device including a positioning rod, the vehicle positioning method including:
acquiring a first distance between a battery of an inbound vehicle and a front axle in a first direction, a second distance between a center of a front wheel and a center of the positioning rod in the first direction when the positioning rod is in contact with the front wheel of the vehicle, a third distance between a center of a current position of the positioning rod and a recess wall of the battery swapping recess in the first direction, and a safety distance between the battery and the recess wall of the battery swapping recess;
determining a distance value to be moved by the positioning rod on the basis of the first distance, the second distance, the third distance and the safety distance;
controlling the positioning rod to move by the distance value to be moved in the first direction; and
controlling the vehicle to move in the first direction and to make contact with the positioning rod.

According to the vehicle positioning method for a battery swapping station provided in the embodiment of the present application, by acquiring the first distance between the battery of the inbound vehicle and the front axle in the first direction, the second distance between the center of the front wheel and the center of the positioning rod in the first direction when the positioning rod is in contact with the front wheel of the vehicle, the third distance between the center of the current position of the positioning rod and the recess wall of the battery swapping recess in the first direction, and the safety distance between the battery and the recess wall of the battery swapping recess, determining the distance value to be moved by the positioning rod on the basis of the first distance, the second distance, the third distance and the safety distance, and moving the positioning rod by the distance value to be moved, the vehicle contacts with the positioning rod after entering the station, such that the vehicle of any model may be positioned and guided to an excepted position. It is convenient to swap the battery to prevent collision between the battery and the recess wall of the battery swapping recess when the vehicle does not move in place or moves beyond a predetermined position, thereby improving the safety performance.

In some embodiments, the step of determining the distance value to be moved of the positioning rod on the basis of the first distance, the second distance, the third distance and the safety distance includes:
determining a fourth distance between the center of the front wheel and the recess wall of the battery swapping recess in the first direction when the vehicle moves in the first direction and contacts with the positioning rod on the basis of the first distance and the safety distance; and
determining the distance value to be moved on the basis of the second distance, the third distance, and the fourth distance.

According to the vehicle positioning method provided in the embodiment of the present application, by acquiring the fourth distance first, and then determining the distance value to be moved of the positioning rod on the basis of the fourth distance, the second distance, and the third distance, the difficulty in determining the distance value to be moved can be reduced, and the accurate performance of the distance value to be moved can be ensured.

In some embodiments, the first distance, the safety distance, and the fourth distance satisfy the following formula: L4=L1-Q;
the second distance, the third distance, the fourth distance, and the distance value to be moved satisfy the following formula: W=L3-L2-L4;
where L1 is the first distance, and L2 is the second distance; and L3 is the third distance, L4 is the fourth distance, Q is the safety distance, and W is the distance value to be moved.

According to the vehicle positioning method provided in the embodiment of the present application, with the above settings, when a vehicle enters, the first distance and the safety distance are directly input into the formula model to obtain the fourth distance, and the fourth distance, the second distance, and the third distance are input into the corresponding formula model to obtain the distance value to be moved, thereby ensuring that the positioning rod moves and the stop position of the inbound vehicle is limited, and the response speed is fast, thereby facilitating control of the positioning rod.

In some embodiments, a value range of the safety distance is 50 mm to 100 mm.

In the vehicle positioning method provided in the embodiment of the present application, the safety distance is within the above value range, such that when the vehicle enters the station and the battery is disassembled, a probability of collision and friction with the recess wall of the battery swapping recess is reduced. At the same time, this arrangement can facilitate disassembly, assembly and swapping of the battery of the vehicle.

In some embodiments, the battery swapping station further includes a receiving groove, and the positioning method further includes: before the vehicle leaves the battery swapping station, controlling the positioning rod to move in a direction away from the battery swapping recess in the first direction and to be received in the receiving groove, so as to make way for the vehicle.

According to the vehicle positioning method provided in the embodiment of the present application, the battery swapping station further includes the receiving groove, and in the positioning method, before the vehicle leaves the battery swapping station, the positioning rod is controlled to move in the direction away from the battery swapping recess in the first direction and to be received in the receiving groove, such that the vehicle can be avoided, and the vehicle is prevented from being blocked by a blocking rod and being unable to leave the battery swapping station after the battery is swapped.

In a second aspect, the present application provides a vehicle positioning device for a battery swapping station, including: a processor and a memory storing a computer program instruction, where
the processor implements the above vehicle positioning method when executing the computer program instruction.

In a third aspect, the present application further provides a computer-readable storage medium, where the computer-readable storage medium stores a computer program instruction, and when executed by a processor, the computer program instruction implement the above vehicle positioning method for a battery swapping station.

In a fourth aspect, the present application provides a battery swapping station, including:
a battery swapping recess;
a positioning device, disposed on one side of the battery swapping recess in a first direction, where the positioning device includes a positioning rod; and
a control module, configured to perform the vehicle positioning method according to any one of claims 1 to 5.

The battery swapping station provided in the embodiment of the present application includes the battery swapping recess, the positioning device and the control module, where the battery swapping recess is configured to be disposed opposite to a battery area of the vehicle, the positioning device can provide positioning and blocking for the vehicle after entering the station, and the control module may acquire the first distance between the battery of the inbound vehicle and the front axle in the first direction, the second distance between the center of the front wheel and the center of the positioning rod in the first direction when the positioning rod is in contact with the front wheel of the vehicle, the third distance between the center of the current position of the positioning rod and the recess wall of the battery swapping recess in the first direction, and the safety distance between the battery and the recess wall of the battery swapping recess, determine the distance value to be moved by the positioning rod on the basis of the first distance, the second distance, the third distance and the safety distance, and move the positioning rod by the distance value to be moved, such that the vehicle contacts with the positioning rod after entering the station, and thus, the vehicle of any model may be positioned and guided to an excepted position. It is convenient to swap the battery to prevent collision between the battery and the recess wall of the battery swapping recess when the vehicle does not move in place or moves beyond a predetermined position, thereby improving the safety performance.

In some embodiments, the positioning device further includes a driving component and a transmission component, the driving component is electrically connected to the control module, the positioning rod is disposed on the transmission component, and the control module is configured to control the driving component on the basis of the distance value to be moved, such that the positioning rod moves by the distance value to be moved in the first direction.

According to the battery swapping station provided in the embodiment of the present application, by configuring the positioning device to further include the driving component and the transmission component, and defining that the control module is configured to control the driving component according to the distance value to be moved, a movement distance of the positioning rod can be accurately controlled on the basis of a control signal of the control module, such that after the vehicle enters the station and contacts with the positioning rod and stops running, the battery of the vehicle can reach the corresponding position of the battery swapping recess and maintain a safety distance range from the recess wall of the battery swapping recess. Vehicle of different models can be guided to expected positions, thereby facilitating battery swapping.

In some embodiments, the transmission component includes a driving wheel, a transmission wheel and a traction element, the driving wheel is in transmission fit with the transmission wheel through the traction element, the positioning rod is disposed on the traction element, and the driving component is connected to the driving wheel.

According to the battery swapping station provided in the embodiment of the present application, the transmission component is in the above structural form, such that the driving component may drive the corresponding driving wheel to rotate, and the driving wheel drives the traction element to move, and then can drive the positioning rod connected to the traction element to move, thereby ensuring a position adjustment requirement of the positioning rod in the first direction. In addition, this form can improve the accuracy of position adjustment of the positioning rod, and ensure the traction requirement of the required position of the vehicle.

In some embodiments, the traction element includes one of a transmission belt and a transmission chain, the transmission component further comprises an adapter plate, the adapter plate is disposed on the traction element, and the positioning rod is detachably connected to the adapter plate.

According to the battery swapping station provided in the embodiment of the present application, the traction element is in the above structural form, such that a requirement of transmission cooperation between the traction element and the driving wheel and the transmission wheel can be ensured, and moreover, the adapter plate is disposed and detachably connected to the positioning rod, to facilitate disassembly and assembly of the positioning rod, and when the positioning rod is worn, the positioning rod may be repaired or replaced in time.

In some embodiments, two ends of the positioning rod in a second direction are respectively connected to the driving component and the transmission component that cooperate with each other, and the second direction is intersected with the first direction.

According to the battery swapping station provided in the embodiment of the present application, because the positioning rod has a relatively long length, the two ends of the positioning rod in the second direction are respectively connected to the driving component and the transmission component, such that the positioning rod can be supported at the two ends of the positioning rod in the length direction, and moreover, the positioning rod may be synchronously driven to move in the first direction, thereby ensuring the stability of position adjustment of the positioning rod.

In some embodiments, the battery swapping station further includes a receiving groove, the receiving groove is formed in one side of the positioning device away from the battery swapping recess in the first direction, and a shape of the receiving groove matches a shape of the positioning rod and the receiving groove is configured to receive the positioning rod.

According to the battery swapping station provided in the embodiment of the present application, the battery swapping station further includes the receiving groove, and in the positioning method, before the vehicle leaves the battery swapping station, the positioning rod is controlled to move in the direction away from the battery swapping recess in the first direction and to be received in the receiving groove, such that the vehicle can be avoided, and the vehicle is prevented from being blocked by a blocking rod and being unable to leave the battery swapping station after the battery is swapped.

In some embodiments, the positioning device further includes a sensor disposed on the positioning rod, the sensor is configured to detect a pressure value received by the positioning rod, and the control module is further configured to send an alarm signal when the pressure value exceeds a preset threshold range.

According to the battery swapping station provided in the embodiment of the present application, by disposing the sensor, and configuring the sensor to detect the pressure value received by the positioning rod, the control module is further configured to send the alarm signal when the pressure value exceeds the preset threshold range. It may be ensured that when the vehicle is positioned and stopped by the positioning rod after entering the station, the probability of the positioning rod being broken when the vehicle passes through the predetermined position can be avoided, which can not only improve the accuracy of the vehicle reaching the predetermined position after entering the station, but also improve the overall safety of the battery swapping station.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred embodiments below. The accompanying drawings are used only for the purpose of illustrating the preferred implementations and are not to be construed as limitations on the present application. Moreover, throughout the drawings, identical reference numerals are used to designate identical components. In the accompanying drawings:
FIG. 1 is a schematic structural diagram of a vehicle provided in an embodiment of the present application;
FIG. 2 is a schematic structural diagram of a battery provided in an embodiment of the present application;
FIG. 3 is a flow schematic diagram of a vehicle positioning method for a battery swapping station provided in an embodiment of the present application;
FIG. 4 is a schematic structural diagram corresponding to a vehicle positioning method for a battery swapping station provided in an embodiment of the present application;
FIG. 5 is a schematic structural diagram of a vehicle positioning method for a battery swapping station provided in an embodiment of the present application;
FIG. 6 is a schematic structural diagram of a battery swapping station provided in an embodiment of the present application; and
FIG. 7 is a schematic structural diagram of a battery swapping station provided in an embodiment of the present application in another state.

Reference numerals in specific implementations are as follows:
1000, battery swapping station;
10, battery swapping recess; 11, recess wall;
20, positioning device; 21, positioning rod; 22, driving component; 23, transmission component; 231, driving wheel; 232, transmission wheel; 233, traction element; 234, adapter plate;
30, receiving groove; 40, sensor;
1, vehicle;
100, battery; 110, case; 110a, first case portion; 110b, second case portion; 120, battery cell; 200, controller; 300, motor; 400, front axle; 500, front wheel;
L1, first distance; L2, second distance; L3, third distance; L4, fourth distance; Q, safety distance; W, distance value to be moved;
X, first direction; Y, second direction;
501, memory; 502, processor; 503, communication interface; 504, bus.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

It should be noted that, unless otherwise specified, the technical terms or scientific terms used in the embodiments of the present application shall have the ordinary meanings as understood by a person of ordinary skill in the art to which the embodiments of the present application pertain.

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In addition, the technical terms "first", "second" and the like are only used for descriptive purposes, and should not be construed as indicating or implying relative importance or implicitly indicating the number of technical features indicated. In the description of the embodiments of the present application, "a plurality of" means two or more unless specifically defined otherwise.

In the description of the embodiments of the present application, unless otherwise explicitly specified and defined, the technical terms "installed", "connected", "connect", "fixed", and the like are to be understood in a broad sense. For example, the connection may be a fixed connection, a detachable connection, or an integral connection; may refer to a mechanical connection or electrical connection, any may refer to a direct connection, an indirect connection via an intermediate medium, or an internal communication between two elements or interaction between two elements. A person of ordinary skill in the art may understand the specific meanings of the above terms in the embodiments of the present application according to specific situations.

In the description of the embodiments of the present application, unless otherwise specified and limited, a first feature being "above" or "below" a second feature may be that the first feature is in direct contact with the second feature, or the first feature is in indirect contact with the second feature through an intermediate medium. Moreover, the first feature being "over", "above", or "on" the second feature may be that the first feature is directly above or diagonally above the second feature, or merely indicate that the first feature is horizontally higher than the second feature. The first feature being "below", "under", or "beneath" the second feature may be that the first feature is directly below or diagonally below the second feature, or merely indicate that the first feature is horizontally lower than the second feature.

With the development of new energy technologies, devices using batteries are increased, and when electric energy of electric devices runs out, the electric energy is usually replenished by connection with a charging device, for example, an electric vehicle may be charged by connecting it to a charging pile. Charging takes a long time, affecting user experience. Compared with charging, battery swapping can realize the replenishment of electric energy faster, and when the battery is swapped, the electrical device needs to be moved to the battery swapping station, and the battery is disassembled in the corresponding area to realize rapid battery swapping.

The electrical device mentioned in the embodiments of the present application may be a vehicle. The vehicle may be a fuel vehicle, a gas vehicle, or a new energy vehicle, and the new energy vehicle may be a battery electric vehicle, a hybrid vehicle, or a range-extended electric vehicle.

In the following, a vehicle is used as an example of the electric device.

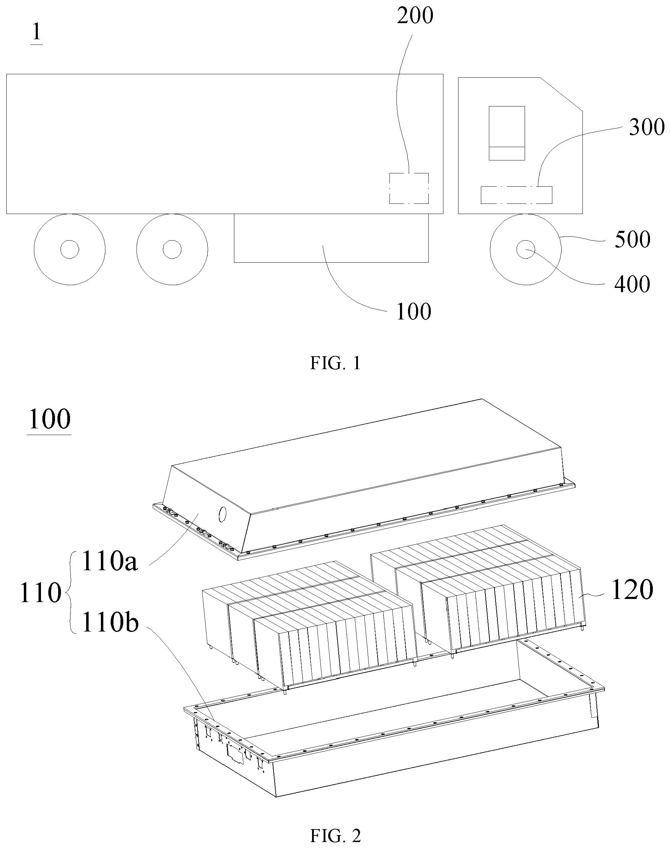

As shown in FIG. 1, the vehicle 1 is provided with a battery 100, which may be disposed at the bottom, head, or tail of the vehicle 1. The battery 100 may be configured to power the vehicle 1, for example, the battery 100 may be used as an operating power source for the vehicle 1.

The vehicle 1 may further include a controller 200, a motor 300, a front axle 400, and a front wheel 500 connected to the front axle 400, where the controller 200 is configured to control the battery 100 to power the motor 300, for example, for a working power requirement of the vehicle 1 during starting, navigating, and driving.

In some embodiments of the present application, the battery 100 may be used not only as an operating power source for the vehicle 1, but also as a driving power source for the vehicle 1, instead of or partially instead of fuel or natural gas to provide driving power to the vehicle 1.

In some embodiments, the battery 100 may be snap-fitted to the chassis of the vehicle 1 through a snap-fitting structure.

As shown in FIG. 2, the battery 100 may refer to a single physical module that includes one or more battery cells 110 for providing a higher voltage and capacity.

In some embodiments, the battery 100 may be a battery pack.

As an example, the battery 100 includes a case 110 and a battery cell 120. The battery cell 120 is accommodated in the case 110.

The case 110 may be a component that accommodates the battery cell 120. The case 110 provides an accommodation space for the battery cell 120, and the case 110 may have various structures.

In some embodiments, the case 110 may include a first case portion 110a and a second case portion 110b, the first case portion 110a and the second case portion 110b cover each other, and the first case portion 110a and the second case portion 110b jointly define the accommodation space for accommodating the battery cell 120. The second case portion 110b may be of a hollow structure with one end open, the first case portion 110a is of a plate-shaped structure, and the first case portion 110a covers an open side of the second case portion 110b to form the case 110 with the accommodating space. The first case portion 110a and the second case portion 110b may each be of a hollow structure with one side open, and the open side of the first case portion 110a covers the open side of the second case portion 110b to form the case 110 with the accommodation space. Certainly, the first case portion 110a and second case portion 110b may be in various shapes such as cylinder and rectangular cuboid.

Assuming that the first case portion 110a covers the top of the second case portion 110b, the first case portion 110a may also be referred to as an upper case cover, and the second case portion 110b may also be referred to as a lower case 110.

In the battery 100, one or more battery cells 120 may be provided. If a plurality of battery cells 120 are provided, the plurality of battery cells 120 may be subjected to series connection, parallel connection, or series-parallel connection, and the series-parallel connection means that the plurality of battery cells 120 are subjected to both series connection, and parallel connection.

The plurality of battery cells 120 may be directly connected in series, in parallel, or in a combination of both, and the whole of the plurality of battery cells 120 is accommodated in the case 110. Certainly, the plurality of battery cells 120 are subjected to series connection, or parallel connection, or series-parallel connection first to form a battery module, and a plurality of battery modules are integrated by series connection, parallel connection, or series-parallel connection, and accommodated in the case 110.

In an existing battery swapping station, when vehicles of different size specifications enter the battery swapping station, it is impossible to reasonably plan various types of vehicles and fix the vehicles at expected positions, which causes inconvenience in disassembling and swapping the battery 100.

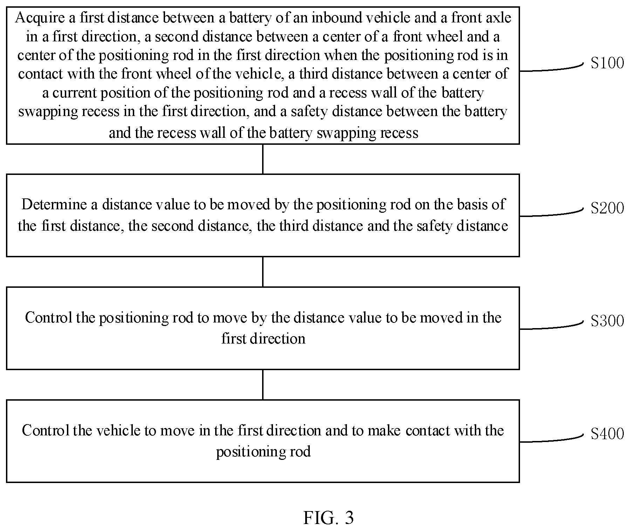

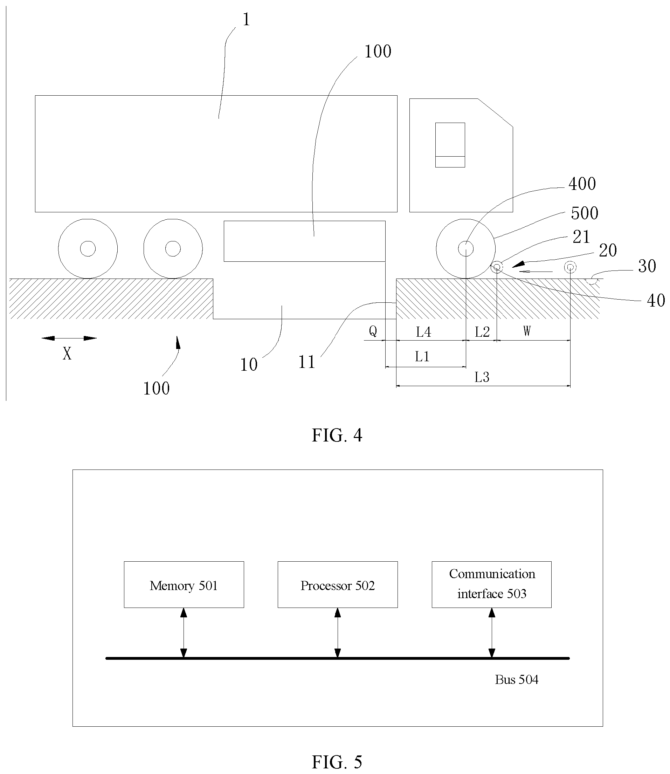

In view of this, the embodiments of the present application provide a vehicle positioning method and device for a battery swapping station, a storage medium, and a battery swapping station, which can meet the control of parking positions of vehicles of different models, thereby facilitating swapping of the battery 100.
As shown in FIG. 3 and FIG. 4, the vehicle positioning method for a battery swapping station provided in the embodiment of the present application is applied to a battery swapping station 1000, the battery swapping station 1000 including a battery swapping recess 10 and a positioning device 20, the positioning device 20 including a positioning rod 21, and the positioning method including:
S100, a first distance L1 between a battery 100 of an inbound vehicle 1 and a front axle 400 in a first direction X, a second distance L2 between a center of a front wheel 500 and a center of the positioning rod 21 in the first direction X when the positioning rod 21 is in contact with the front wheel 500 of the vehicle 1, a third distance L3 between a center of a current position of the positioning rod 21 and a recess wall 11 of the battery swapping recess 10 in the first direction X, and a safety distance Q between the battery 100 and the recess wall 11 of the battery swapping recess 10 are acquired;
S200, a distance value W to be moved by the positioning rod 21 is determined on the basis of the first distance L1, the second distance L2, the third distance L3 and the safety distance Q;
S300, the positioning rod 21 is controlled to move by the distance value W to be moved in the first direction X; and
S400, the vehicle 1 is controlled to move in the first direction X and to make contact with the positioning rod 21.

In step S100, for the vehicle 1 entering the battery swapping station 1000, the first distance L1 between the battery 100 and the front axle 400 of the vehicle in the first direction X is known data on the basis of the model of the vehicle 1. The first distance L1 may be understood as a distance between the battery 100 of the vehicle 1 and the front axle 400 of the vehicle 1, and may be a vertical distance between an end surface of the battery 100 facing the front axle 400 and an axis of the front axle 400 in the first direction X.

The radial dimension of the front wheel 500 of the inbound vehicle 1 is acquired on the basis of the model of the inbound vehicle 1 is known, and the distance from the center of the positioning rod 21 to an outer peripheral surface thereof may be acquired in advance. The positioning rod 21 may be cylindrical, and the distance from the center of the positioning rod 21 to the outer peripheral surface thereof may be understood as the radial dimension of the positioning rod 21, such that the second distance L2 can be acquired.

The current position of the positioning rod 21 may be acquired by a controller that controls the movement of the positioning rod, that is, the third distance L3 may be determined on the basis of the current position of the positioning rod 21.

The safety distance Q may be a preset fixed value, and the safety distance Q needs to be ensured between the battery 100 and the recess wall 11 of the battery swapping recess 10 regardless of the model of the vehicle.

The recess wall 11 of the battery swapping recess 10 may be understood as a wall surface on a side close to the positioning rod 21 in the first direction X.

In step S200, the distance between the center of the front wheel 500 and the recess wall 11 of the battery swapping recess 10 in the first direction X may be first acquired on the basis of the first distance L1 and the safety distance Q, and then the distance value W to be moved of the positioning rod 21 is determined on the basis of the third distance L3 and the difference between the distance in the first direction X between the center of the front wheel 500 and the recess wall 11 of the battery swapping recess 10, and the second distance L2.

In step S300, the positioning rod 21 may be manually controlled to move, or may be controlled by a driving device, for example, the movement of the positioning rod is controlled by a driving device such as a driving motor and a telescopic cylinder.

In step S400, the vehicle 1 is controlled to move in the first direction X and to contact with the positioning rod 21, and then the vehicle 1 may be stopped. In this case, the distance between the battery of the vehicle 1 and the recess wall 11 of the battery swapping recess 10 is the safety distance Q.

According to the vehicle 1 positioning method for a battery swapping station 1000 provided in the embodiment of the present application, by acquiring the first distance L1 between the battery 100 of the inbound vehicle 1 and the front axle 400 in the first direction X, the second distance L2 between the center of the front wheel 500 and the center of the positioning rod 21 in the first direction X when the positioning rod 21 is in contact with the front wheel 500 of the vehicle 1, the third distance L3 between the center of the current position of the positioning rod 21 and the recess wall 11 of the battery swapping recess 10 in the first direction X, and the safety distance Q between the battery 100 and the recess wall 11 of the battery swapping recess 10, determining the distance value W to be moved by the positioning rod 21 on the basis of the first distance L1, the second distance L2, the third distance L3 and the safety distance Q, and moving the positioning rod 21 by the distance value W to be moved, the vehicle 1 contacts with the positioning rod 21 after entering the station, such that the vehicle 1 of any model may be positioned and guided to an excepted position. It is convenient to swap the battery 100 to present collision between the battery 100 and the recess wall 11 of the battery swapping recess 10 when the vehicle 1 does not move in place or moves beyond a predetermined position, thereby improving the safety performance.
In some optional embodiments, in the vehicle 1 positioning method for a battery swapping station 1000 provided in the embodiments of the present application, the step S200 of determining the distance value W to be moved of the positioning rod 21 on the basis of the first distance L1, the second distance L2, the third distance L3 and the safety distance Q may specifically include:
a fourth distance L4 between the center of the front wheel 500 and the recess wall 11 of the battery swapping recess 10 in the first direction X when the vehicle 1 moves in the first direction X and contacts with the positioning rod 21 is determined on the basis of the first distance L1 and the safety distance Q; and
the distance value W to be moved is determined on the basis of the second distance L2, the third distance L3 and the fourth distance L4.

The fourth distance L4 between the center of the front wheel 500 and the recess wall 11 of the battery swapping recess 10 in the first direction X may be understood as the distance between a wall surface of the recess wall 11 of the battery swapping recess 10 on a side close to the positioning rod 21 in the first direction X and the center of the front wheel 500 in the first direction X.

The fourth distance L4 may be acquired by a difference between the first distance L1 and the safety distance Q.

According to the vehicle 1 positioning method provided in the embodiment of the present application, by acquiring the fourth distance L4 first, and then determining the distance value W to be moved of the positioning rod 21 on the basis of the fourth distance L4, the second distance L2, and the third distance L3, the difficulty in determining the distance value W to be moved can be reduced, and the accurate performance of the distance value to be moved can be ensured.

In some optional embodiments, in the vehicle 1 positioning method provided in the embodiments of the present application, the first distance L1, the safety distance Q, and the fourth distance L4 satisfy the following formula: L4=L1-Q.

The second distance L2, the third distance L3, the fourth distance L4, and the distance value W to be moved satisfy the following formula: W=L3-L2-L4.

L1 is the first distance L1, and L2 is the second distance L2; and L3 is the third distance L3, L4 is the fourth distance L4, Q is the safety distance Q, and W is the distance value W to be moved.

According to the vehicle 1 positioning method provided in the embodiment of the present application, with the above settings, when a vehicle 1 enters, the first distance L1 and the safety distance Q are directly input into the formula model to obtain the fourth distance L4, and the fourth distance L4, the second distance L2, and the third distance L3 are input into the corresponding formula model to obtain the distance value W to be moved, thereby ensuring that the positioning rod 21 moves and the stop position of the inbound vehicle 1 is limited, and the response speed is fast, thereby facilitating control of the positioning rod 21.

In some optional embodiments, according to the vehicle 1 positioning method provided in the embodiment of the present application, a value range of the safety distance Q is 50 mm to 100 mm.

The safety distance Q may be any value between 50 mm and 100 mm, including two extreme values 50 mm and 100 mm. Optionally, the safety distance may be any value between 60 mm and 90 mm, including 70 mm, 80 mm, and the like.

According to the vehicle 1 positioning method provided in the embodiment of the present application, the safety distance Q is within the above value range, such that when the vehicle 1 enters the station and the battery is disassembled, a probability of collision and friction with the recess wall 11 of the battery swapping recess 10 is reduced. At the same time, this arrangement can facilitate disassembly, assembly and swapping of the battery of the vehicle 1.

In some optional embodiments, according to the vehicle 1 positioning method provided in the embodiment of the present application, the battery swapping station 1000 further includes a receiving groove 30, and the positioning method further includes: before the vehicle 1 leaves the battery swapping station 1000, the positioning rod 21 is controlled to move in a direction away from the battery swapping recess 10 in the first direction X and to be received in the receiving groove 30, so as to make way for the vehicle 1.

The shape of the receiving groove 30 may match the shape of the positioning rod 21 and the receiving groove is configured to receive the positioning rod 21, and certainly, the size of the receiving groove 30 may also be larger than the size of the positioning rod 21 to ensure the reception of the positioning rod 21.

The receiving groove 30 may be formed in a support area for supporting the positioning rod 21, and a groove may be formed in the support area to form the receiving groove 30 mentioned above.

According to the vehicle 1 positioning method provided in the embodiment of the present application, the battery swapping station 1000 further includes the receiving groove 30, and in the positioning method, before the vehicle 1 leaves the battery swapping station 1000, the positioning rod 21 is controlled to move in the direction away from the battery swapping recess 10 in the first direction X and to be received in the receiving groove 30, such that the vehicle 1 can be avoided, and the vehicle 1 is prevented from being blocked by a positioning rod 21 and being unable to leave the battery swapping station 1000 after the battery 100 is swapped.

As shown in FIG. 5, a second aspect of the present application further provides a vehicle 1 positioning device for a battery swapping station 1000. The positioning device includes a memory 501, a processor 502, and a computer program stored in the memory 501 and executable in the processor 502.

In some examples, the processor 502 may comprise a central processing unit (CPU), or an application specific integrated circuit (ASIC), or may be configured as one or more integrated circuits to implement the embodiments of the present application.

The memory 501 may include a large-capacity memory for data or instructions. For example, but not by way of limitation, the memory 501 may include a hard disk drive (HDD), a floppy disk drive, a flash memory, an optical disc, a magneto-optical disc, a magnetic tape, or a universal serial bus (USB) drive, or a combination of two or more of the above.

The memory 501 may include a read-only memory (ROM), a random access memory (RAM), a magnetic disk storage medium device, an optical storage medium device, a flash memory device, or an electrical, optical, or another physical/tangible memory storage device. Therefore, generally, the memory includes one or more tangible (non-transitory) computer-readable storage media (e.g., memory devices) encoded with software that includes computer-executable instructions, and when executed (e.g., by one or more processors), the software is operable to perform the operations described with reference to a model publishing method in a distributed system in the embodiments of the present application.

The processor 502 runs a computer program corresponding to the executable program code by reading the executable process code stored in the memory 501, to implement the model publishing method in a distributed system in the above embodiments.

In some examples, the vehicle 1 positioning device may also include a communication interface 503 and a bus 504. The memory 501, the processor 502, and the communication interface 503 are connected via the bus 504 and implement mutual communication.

The communication interface 503 is mainly configured to implement communication among modules, apparatuses, units and/or devices in the embodiments of the present application. An input device and/or an output device may also be accessed via the communication interface 503.

The bus 504 includes hardware, software, or both, and couples components of the vehicle 1 positioning device to each other. For example, but not by way of limitation, the bus 504 may include an accelerated graphics port (AGP) or other graphics buses, an extended industry standard architecture (EISA) bus, a front side bus (FSB), a hyper transport (HT) interconnect, an industry standard architecture (ISA) bus, an InfiniBand interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local bus (VLB), or other suitable buses, or a combination of two or more of these. The bus 504 may include one or more buses, where appropriate. Although the embodiments herein describe and illustrate a particular bus, present application contemplates any suitable bus or interconnect.

A third aspect of the present application further provides a computer-readable storage medium, where the computer-readable storage medium stores a computer program instruction, and when executed by a processor, the computer program instruction implements the vehicle 1 positioning method in the above embodiments and can achieve the same technical effect. To avoid repetition, details are not repeated herein. The computer-readable storage medium may include a non-transitory computer-readable storage medium, such as a read-only memory (ROM), a random access memory (RAM), a magnetic disk, or an optical disk, which is not limited herein.

It should be noted that the embodiments in the present specification are described in a progressive manner, and the same or similar parts among the embodiments may be referred to each other, and each embodiment focuses on the difference from other embodiments. For the apparatus embodiments, the device embodiments, and the computer-readable storage medium embodiments, reference may be made to the description of the method embodiments. The present application is not limited to the specific steps and structures described above and shown in the figures. Those skilled in the art may make various changes, modifications, and additions, or change the order of the steps after grasping the spirit of the present application. Moreover, for the sake of brevity, detailed descriptions of known methods are omitted herein.

Various aspects of the present application have been described above with reference to the flow charts and/or block diagrams of the methods, apparatuses (systems), and computer program products according to the embodiments of the present application. It should be understood that each block in the flow charts and/or block diagrams, as well as combinations of the blocks in the flow charts and/or block diagrams, may be implemented by computer program instructions. These computer program instructions may be provided to a processor of a general-purpose computer, a dedicated computer, or other programmable data processing apparatus to produce a machine, such that these instructions, when executed by the processor of the computer or another programmable data processing apparatus, enable the implementation of the functions/actions specified in one or more blocks of the flow charts and/or block diagrams. Such a processor may be, but is not limited to, the general-purpose processor, the dedicated processor, a special application processor, or a field-programmable logic circuit. It is also understandable that each block in the block diagrams and/or flow charts, as well as combinations of the blocks in the block diagrams and/or flow charts, may also be implemented by a dedicated hardware that performs specified functions or actions, or may be implemented by a combination of the dedicated hardware and computer instructions.

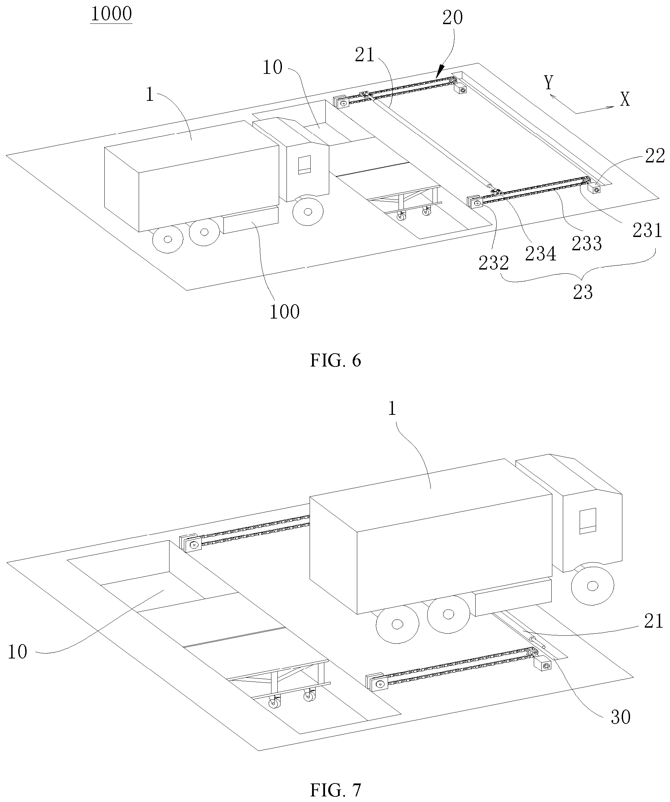

As shown in FIGS. 6 and 7, a fourth aspect of the present application further provides a battery swapping station 1000, including a battery swapping recess 10, a positioning device 20 and a control module (not shown), where the positioning device 20 is disposed on one side of the battery swapping recess 10 in a first direction X, and the positioning device 20 includes a positioning rod 21. The control module is configured to perform the above vehicle 1 positioning method.

The battery swapping recess 10 may be an open slot formed by excavating the battery swapping station 1000 in a predetermined area. The battery swapping recess 10 may be a polygonal slot, and optionally, may be a quadrangular slot.

The battery swapping recess 10 is configured to be disposed opposite to the battery of the vehicle 1, and when the vehicle 1 enters the battery swapping station 1000, an orthographic projection of the battery may just fall within the battery swapping recess 10.

The positioning device 20 is configured to position the vehicle 1, such that the vehicle 1 can stop at a predetermined position.

The control module may be disposed in a corresponding control cabinet or the like. The control module is configured to perform the vehicle 1 positioning method provided in any of the above embodiments.

The battery swapping station 1000 provided in the embodiment of the present application includes the battery swapping recess 10, the positioning device 20 and the control module, where the battery swapping recess 10 is configured to be disposed opposite to a battery area of the vehicle 1, the positioning device 20 can provide positioning and blocking for the vehicle 1 after entering the station, and the control module may acquire the first distance L1 between the battery 100 of the inbound vehicle 1 and the front axle 400 in the first direction X, the second distance L2 between the center of the front wheel 500 and the center of the positioning rod 21 in the first direction X when the positioning rod 21 is in contact with the front wheel 500 of the vehicle 1, the third distance L3 between the center of the current position of the positioning rod 21 and the recess wall 11 of the battery swapping recess 10 in the first direction X, and the safety distance Q between the battery 100 and the recess wall 11 of the battery swapping recess 10, determine the distance value W to be moved by the positioning rod 21 on the basis of the first distance L1, the second distance L2, the third distance L3 and the safety distance Q, and move the positioning rod 21 by the distance value W to be moved, such that the vehicle 1 contacts with the positioning rod 21 after entering the station, and thus, the vehicle 1 of any model may be positioned and guided to an excepted position. It is convenient to swap the battery 100 to present collision between the battery 100 and the recess wall 11 of the battery swapping recess 10 when the vehicle 1 does not move in place or moves beyond a predetermined position, thereby improving the safety performance.

In some optional embodiments, according to the battery swapping station 1000 provided in the embodiments of the present application, the positioning device 20 further includes a driving component 22 and a transmission component 23, the driving component 22 is electrically connected to the control module, the positioning rod 21 is disposed on the transmission component 23, and the control module is configured to control the driving component 22 on the basis of the distance value W to be moved, such that the positioning rod 21 moves by the distance value W to be moved in the first direction X.

The driving component 22 includes a driving motor, a telescopic cylinder, a lead screw nut, a worm gear and worm and the like, and the driving component 22 can receive a control signal of the control module and drive the positioning rod 21 to move by a preset distance in the first direction X on the basis of the control signal.

The transmission component 23 includes a sprocket chain, a gear rack, a transmission belt of the transmission wheel 232, and the like, and is configured to transfer power of the driving component 22 to the positioning rod 21.

According to the battery swapping station 1000 provided in the embodiment of the present application, by configuring the positioning device 20 to further include the driving component 22 and the transmission component 23, and defining that the control module is configured to control the driving component 22 according to the distance value W to be moved, a movement distance of the positioning rod 21 can be accurately controlled on the basis of a control signal of the control module, such that after the vehicle 1 enters the station and contacts with the positioning rod 21 and stops running, the battery of the vehicle can reach the corresponding position of the battery swapping recess 10 and maintain a safety distance Q range from the recess wall 11 of the battery swapping recess 10. Vehicle of different models can be guided to expected positions, thereby facilitating battery swapping.

In some optional embodiments, according to the battery swapping station 1000 provided in the embodiments of the present application, the transmission component 23 includes a driving wheel 231, a transmission wheel 232 and a traction element 233, the driving wheel 231 is in transmission fit with the transmission wheel 232 through the traction element 233, the positioning rod 21 is disposed on the traction element 233, and the driving component 22 is connected to the driving wheel 231.

The driving wheel 231 includes wheel structures capable of achieving a transmission function, such as gear wheels, sprockets, and pulleys.

The transmission wheel 232 may also include wheel structures capable of achieving a transmission function, such as gear wheels, sprockets, and pulleys.

The traction element 233 includes structures such as a toothed belt, a chain, and a belt, to be in transmission fit with the driving wheel 231 and the transmission wheel 232.

The positioning rod 21 is disposed on the traction element 233, which may be understood as that the positioning rod 21 is connected to the traction element 233, and when driving the traction element 233 to act, the driving wheel 231 can drive the positioning rod 21 to move.

According to the battery swapping station 1000 provided in the embodiment of the present application, the transmission component 23 is in the above structural form, such that the driving component 22 may drive the corresponding driving wheel 231 to rotate, and the driving wheel 231 drives the traction element 233 to move, and then can drive the positioning rod 21 connected to the traction element 233 to move, thereby ensuring a position adjustment requirement of the positioning rod 21 in the first direction X. In addition, this form can improve the accuracy of position adjustment of the positioning rod 21, and ensure the traction requirement of the required position of the vehicle 1.

In some optional embodiments, according to the battery swapping station 1000 provided in the embodiments of the present application, the traction element 233 includes one of a transmission belt and a transmission chain, the transmission component 23 further includes an adapter plate 234, the adapter plate 234 is disposed on the traction element 233, and the positioning rod 21 is detachably connected to the adapter plate 234.

The traction element 233 may include a transmission belt, which may be a flat belt, a V-belt, a toothed belt, or the like, and correspondingly, the driving wheel 231 and the transmission wheel 232 may be friction wheels, pulleys, gears, or the like. Certainly, the traction element 233 may also include a transmission chain, and correspondingly, the driving wheel 231 and the transmission wheel 232 may be sprockets.

The adapter plate 234 may be fastened by a fastener such as a bolt, or may be detachably connected to the positioning rod 21 in a snap-fit manner or the like.

The traction element 233 may extend in the first direction X and form a closed loop, and the driving wheel 231 and the transmission wheel 232 may both be distributed in the first direction X.

According to the battery swapping station 1000 provided in the embodiment of the present application, the traction element 233 is in the above structural form, such that a requirement of transmission cooperation between the traction element and the driving wheel 231 and the transmission wheel 232 can be ensured, and moreover, the adapter plate 234 is disposed and detachably connected to the positioning rod 21, to facilitate disassembly and assembly of the positioning rod 21, and when the positioning rod 21 is worn, the positioning rod may be repaired or replaced in time.

In some optional embodiments, according to the battery swapping station 1000 provided in the embodiments of the present application, two ends of the positioning rod 21 in a second direction Y are respectively connected to the driving component 22 and the transmission component 23 that cooperate with each other, and the second direction Y is intersected with the first direction X.

The second direction Y may be perpendicular to the first direction X.

The positioning rod 21 may extend in the second direction Y. The driving component 22 and the transmission component 23 connected to the two ends of the positioning rod 21 in the second direction Y may be symmetrically disposed.

According to the battery swapping station 1000 provided in the embodiment of the present application, because the positioning rod 21 has a relatively long length, the two ends of the positioning rod 21in the second direction Y are respectively connected to the driving component 22 and the transmission component 23, such that the positioning rod 21 can be supported at the two ends of the positioning rod in the length direction, and moreover, the positioning rod 21 may be synchronously driven to move in the first direction X, thereby ensuring the stability of position adjustment of the positioning rod 21.

In some optional embodiments, the battery swapping station 1000 provided in the embodiments of the present application further includes a receiving groove 30, the receiving groove 30 is formed in one side of the positioning device 20 away from the battery swapping recess 10 in the first direction X, and a shape of the receiving groove 30 matches a shape of the positioning rod 21 and the receiving groove is configured to receive the positioning rod 21.

The receiving groove 30 may be formed in a support area for supporting the positioning rod 21, and a groove may be formed in the support area to form the receiving groove 30 mentioned above.

According to the battery swapping station 1000 provided in the embodiment of the present application, the battery swapping station 1000 further includes the receiving groove 30, and in the positioning method, before the vehicle 1 leaves the battery swapping station 1000, the positioning rod 21 is controlled to move in the direction away from the battery swapping recess 10 in the first direction x and to be received in the receiving groove 30, such that the vehicle 1 can be avoided, and the vehicle 1 is prevented from being blocked by a blocking rod and being unable to leave the battery swapping station 1000 after the battery is swapped.

In some optional embodiments, in the battery swapping station 1000 provided in the embodiments of the present application, the positioning device 20 further includes a sensor 40 disposed on the positioning rod 21, the sensor 40 is configured to detect a pressure value received by the positioning rod 21, and the control module is further configured to send an alarm signal when the pressure value exceeds a preset threshold range.

The sensor 40 includes, but is not limited to, a structural body for detecting the pressure, such as a pressure sensor 40.

The sensor 40 may be disposed on a side of the positioning rod 21 facing the battery swapping recess 10.

According to the battery swapping station 1000 provided in the embodiment of the present application, by disposing the sensor 40, and configuring the sensor 40 to detect the pressure value received by the positioning rod 21, the control module is further configured to send the alarm signal when the pressure value exceeds the preset threshold range. It may be ensured that when the vehicle 1 is positioned and stopped by the positioning rod 21 after entering the station, the probability of the positioning rod 21 being broken when the vehicle passes through the predetermined position can be avoided, which can not only improve the accuracy of the vehicle 1 reaching the predetermined position after entering the station, but also improve the overall safety of the battery swapping station 1000.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A vehicle positioning method for a battery swapping station, the battery swapping station comprising a battery swapping recess and a positioning device, the positioning device comprising a positioning rod, the vehicle positioning method comprising:
acquiring a first distance between a battery of an inbound vehicle and a front axle in a first direction, a second distance between a center of a front wheel and a center of the positioning rod in the first direction when the positioning rod is in contact with the front wheel of the vehicle, a third distance between a center of a current position of the positioning rod and a recess wall of the battery swapping recess in the first direction, and a safety distance between the battery and the recess wall of the battery swapping recess;
determining a distance value to be moved by the positioning rod on the basis of the first distance, the second distance, the third distance and the safety distance;
controlling the positioning rod to move by the distance value to be moved in the first direction; and
controlling the vehicle to move in the first direction and to make contact with the positioning rod.

2. The vehicle positioning method according to claim 1, wherein the step of determining a distance value to be moved by the positioning rod on the basis of the first distance, the second distance, the third distance and the safety distance comprises:
determining a fourth distance between the center of the front wheel and the recess wall of the battery swapping recess in the first direction when the vehicle moves in the first direction and contacts with the positioning rod on the basis of the first distance and the safety distance; and
determining the distance value to be moved on the basis of the second distance, the third distance, and the fourth distance.

3. The vehicle positioning method according to claim 2, wherein the first distance, the safety distance, and the fourth distance satisfy the following formula: L4=L1-Q;
the second distance, the third distance, the fourth distance, and the distance value to be moved satisfy the following formula: W=L3-L2-L4;
wherein L1 is the first distance, and L2 is the second distance; and L3 is the third distance, L4 is the fourth distance, Q is the safety distance, and W is the distance value to be moved.

4. The vehicle positioning method according to any one of claims 1 to 3, wherein a value range of the safety distance is 50 mm to 100 mm.

5. The vehicle positioning method according to any one of claims 1 to 4, wherein the battery swapping station further comprises a receiving groove, and the positioning method further comprises: before the vehicle leaves the battery swapping station, controlling the positioning rod to move in a direction away from the battery swapping recess in the first direction and to be received in the receiving groove, so as to make way for the vehicle.

6. A vehicle positioning device for a battery swapping station, comprising: a processor and a memory storing a computer program instruction, wherein
the processor implements the vehicle positioning method according to any one of claims 1 to 5 when executing the computer program instruction.

7. A computer-readable storage medium, wherein the computer-readable storage medium stores a computer program instruction, and when executed by a processor, the computer program instruction implements the vehicle positioning method for a battery swapping station according to any one of claims 1 to 5.

8. A battery swapping station, comprising:
a battery swapping recess;
a positioning device, disposed on one side of the battery swapping recess in a first direction, wherein the positioning device comprises a positioning rod; and
a control module, configured to perform the vehicle positioning method according to any one of claims 1 to 5.

9. The battery swapping station according to claim 8, wherein the positioning device further comprises a driving component and a transmission component, the driving component is electrically connected to the control module, the positioning rod is disposed on the transmission component, and the control module is configured to control the driving component on the basis of the distance value to be moved, such that the positioning rod moves by the distance value to be moved in the first direction.

10. The battery swapping station according to claim 9, wherein the transmission component comprises a driving wheel, a transmission wheel and a traction element, the driving wheel is in transmission fit with the transmission wheel through the traction element, the positioning rod is disposed on the traction element, and the driving component is connected to the driving wheel.

11. The battery swapping station according to claim 10, wherein the traction element comprises one of a transmission belt and a transmission chain, the transmission component further comprises an adapter plate, the adapter plate is disposed on the traction element, and the positioning rod is detachably connected to the adapter plate.

12. The battery swapping station according to any one of claims 9 to 11, wherein two ends of the positioning rod in a second direction are respectively connected to the driving component and the transmission component that cooperate with each other, and the second direction is intersected with the first direction.

13. The battery swapping station according to any one of claims 8 to 12, wherein the battery swapping station further comprises a receiving groove, the receiving groove is formed in one side of the positioning device away from the battery swapping recess in the first direction, and a shape of the receiving groove matches a shape of the positioning rod and the receiving groove is configured to receive the positioning rod.

14. The battery swapping station according to any one of claims 8 to 13, wherein the positioning device further comprises a sensor disposed on the positioning rod, the sensor is configured to detect a pressure value received by the positioning rod, and the control module is further configured to send an alarm signal when the pressure value exceeds a preset threshold range.
